Europäisches Patentamt

European Patent Office

Office européen des brevets

(19)

(11) **EP 1 022 057 A1**

(12) **EUROPÄISCHE PATENTANMELDUNG**

(43) Veröffentlichungstag:
   **26.07.2000  Patentblatt 2000/30**

(51) Int Cl.7: **B01J 19/32**

(21) Anmeldenummer: **99811193.4**

(22) Anmeldetag: **22.12.1999**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **21.01.1999  EP 99810041**

(71) Anmelder: **Sulzer Chemtech AG**
   **8404 Winterthur (CH)**

(72) Erfinder: **Kessler, Erwin**
   **9546 Tuttwil (CH)**

(74) Vertreter: **Sulzer Management AG**
   **KS/Patente/0007,**
   **Zürcherstrasse 12**
   **8401 Winterthur (CH)**

(54) **Packung mit Kreuzkanalstruktur für eine Stoffaustauschkolonne mit hoher spezifischer Trennleistung**

(57)  Die Packung (1) mit Kreuzkanalstruktur für eine Stoffaustauschkolonne (2) soll eine hohe spezifische Trennleistung aufweisen. Die Packung ist durch eine spezifische Oberfläche, a, und einen Neigungswinkel der Kanäle, $\varphi$, spezifizierbar. Sie gehört einer Klasse von Packungen mit $a = a_{cl}$ und $\varphi = \varphi_{cl}$ gemäss folgenden Angaben zu:

-  für in der Packung fliessende Fluide sind jeweils gleich grosse Fluidströme vorgegeben;
-  eine für die Packung empirisch bestimmbare Anzahl n von theoretischen Trennstufen pro Meter, nämlich die Grösse NTSM, ist durch eine erste Funktion $f_1(a, \varphi)$ der Variablen a und $\varphi$ darstellbar;
-  ein Strömungswiderstand, der sich für einen die Packung durchströmenden Gasstrom ergibt, ist durch einen Druckverlust pro Meter, Δp, als eine zweite Funktion $f_2(a, \varphi)$ charakterisierbar;
-  Δp nimmt unter der Nebenbedingung n = const ein relatives Minimum an, für das die Variablen a und $\varphi$ - in Abhängigkeit von der Grösse n - Werte $a_m(n)$ bzw. $\varphi_m(n)$ annehmen;
-  es gilt n > 4.5, $a_{cl} < a_m(n)$, $\varphi_{cl} > \varphi_m(n)$ sowie $\varphi_{cl} > 45°$.

Fig. 2

$$\sigma = 45° : s = \sqrt{2} \; h,$$
$$a = \frac{s}{h^2/2} = \frac{2\sqrt{2}}{h}$$

EP 1 022 057 A1

**Beschreibung**

Die Erfindung betrifft eine Packung mit Kreuzkanalstruktur für eine Stoffaustauschkolonne mit hoher spezifischer Trennleistung, eine Kolonne mit einer derartigen Packung sowie ein Verfahren zum Betreiben einer solchen Kolonne.

Packungen mit Kreuzkanalstruktur sind bereits seit vielen Jahren bekannt (siehe z. B. DE-A 26 01 890 = P.4988). Sie setzen sich in der Regel aus einer Mehrzahl von übereinander angeordneten Packungselementen zusammen, wobei jedes Packungselement aus einer Vielzahl von parallelen Lagen aufgebaut ist. Die Lagen berühren sich und bilden mit gegeneinander offenen Strömungskanälen, die gegen die Vertikale (Kolonnenachse) geneigt sind, die Kreuzkanalstruktur. Mit einer solchen Kolonnenpackung ist ein Stoff- und/oder Wärmetausch durchführbar, nämlich zwischen einem Rieselfilm auf der Packungsoberfläche und einem Gasstrom, der durch die Kanäle strömt.

In einem Standardlehrbuch über Destillation (H. Z. Kister, "Distillation Design", McGraw-Hill, Inc. 1992; Seiten 441 - 458) werden Packungen mit Kreuzkanalstruktur zur Durchführung von Stofftrennverfahren diskutiert. Diese Packungen sind optimal verwendbar, wenn nicht zu hohe spezifische Trennleistungen verlangt werden. Die spezifische Trennleistung lässt sich durch eine Grösse NTSM quantifizieren, die die Anzahl n theoretischer Stufen pro Meter angibt (oder bei Kister durch die in Inch gemessene Grösse HETP, "height equivalent of a theoretical plate", die im wesentlichen der Reziprokwert zur Grösse NTSM ist). Die spezifische Trennleistung wird hier als hoch verstanden, wenn NTSM grösser als 4.5 m$^{-1}$ ist (d. h. n > 4.5).

Bei den bekannten Anwendungen hat es sich in der Praxis herausgestellt, dass eine Klasse von Packungen optimal verwendbar ist, bei denen der Neigungswinkel der Kanäle jeweils gleich gross ist. Als Wert für diesen Neigungswinkel wird im genannten Lehrbuch 45° angegeben (siehe Kister, Table 8.1, insbesondere die Klasse der Packungen "Mellapak ®" 125.Y, 250.Y, 350.Y und 500.Y). Bei der Packungsklasse der "Mellapak ®" (nachfolgend Packungen 125.Y, ...) beträgt dieser Winkel nicht 45° sondern 42.5°; dieser Winkel hat sich als günstiger erwiesen.

Der Erfinder wurde mit dem Problem konfrontiert, Packungen für Trennkolonnen zur Verfügung zu stellen, für welche die spezifische Trennleistung hoch ist und die besonders bei Verfahren zur Luftzerlegung vorteilhaft sind. Dabei erkannte er, dass es sich empfiehlt, bezüglich der Wirkungsweise der Packungen mit Kreuzkanalstruktur weitere Grundlagenversuche durchzuführen, um so aufgrund neu gewonnener Erkenntnisse Kriterien zu kostengünstigeren Packungen vorschlagen zu können.

Aufgabe der Erfindung ist es, eine Packungen mit Kreuzkanalstruktur zu schaffen, die sich durch eine hohe spezifischen Trennleistung auszeichnet und die ein möglichst kostengünstiges Trennverfahren ermöglicht. Diese Aufgabe wird durch Packungen gelöst, die der im Anspruch 1 definierten Klasse von Packungen zugehören.

Die Packung mit Kreuzkanalstruktur für eine Stoffaustauschkolonne soll eine hohe spezifische Trennleistung aufweisen. Die Packung ist durch eine spezifische Oberfläche, a, und einen Neigungswinkel der Kanäle, φ, spezifizierbar. Sie gehört einer Klasse von Packungen mit a = a$_{cl}$ und φ = φ$_{cl}$ gemäss folgenden Angaben zu:

- für in der Packung fliessende Fluide sind für alle Packungen jeweils gleich grosse Fluidströme vorgegeben;
- eine für die Packung empirisch bestimmbare Anzahl n von theoretischen Trennstufen pro Meter, nämlich die Grösse NTSM, ist durch eine erste Funktion f$_1$(a, φ) der Variablen a und φ darstellbar;
- ein Strömungswiderstand, der sich für einen die Packung durchströmenden Gasstrom ergibt, ist durch einen Druckverlust pro Meter, Δp, als eine zweite Funktion f$_2$(a, φ) charakterisierbar;
- Δp nimmt unter der Nebenbedingung n = const ein relatives Minimum an, für das die Variablen a und φ - in Abhängigkeit von der Grösse n - Werte a$_m$(n) bzw. φ$_m$(n) annehmen;
- es gilt n > 4.5, a$_{cl}$ < a$_m$(n), φ$_{cl}$ > φ$_m$(n) sowie φ$_{cl}$ > 45°.

Die abhängigen Ansprüche 2 bis 7 betreffen besondere Ausführungsformen der erfindungsgemässen Packung. Gegenstand von Anspruch 8 ist eine Kolonne mit einer solchen Packung, jener der Ansprüche 9 und 10 ein Verfahren zum Betreiben der Kolonne.

Die Erfindung soll anhand von zwei Beispielen illustriert werden:

Die Packung 750.Y (spezifische Oberfläche a = 750 m$^{-1}$, Neigungswinkel der Kanäle φ = 42.5°) weist 5.5 Trennstufen pro Meter auf (n = 5.5). Wird der Winkel auf 50° erhöht, so kann die für die Stofftrennung benötigte Packungsoberfläche auf 500 m$^2$/m$^3$ reduziert werden, wodurch sich der Aufwand für das Packungsmaterial auf 66% reduziert. Dabei bleibt die Trennleistung bei praktisch unverändertem Strömungswiderstand der Packung (Druckverlust Δp = 2 mbar/m bei F = v$_G\sqrt{\rho_G}$ = 1.5 Pa$^{0.5}$) ebenfalls unverändert. Es liesse sich zusätzliches Material bei gleicher Trennleistung einsparen, allerdings auf Kosten eines vergrösserten Strömungswiderstands (für a = 450 m$^{-1}$ und φ = 57°, Δp = 2.7 mbar/m).

Für die Packung 500.Y (a = 500 m$^{-1}$, φ = 42.5°) ist n = 4.5. Für φ = 46° ist a = 450 m$^{-1}$, d. h. der Materialaufwand reduziert sich auf 90%, wobei der Strömungswiderstand praktisch unverändert ist. Für φ = 50° ist a = 400 m$^{-1}$ (Materialaufwand 80%), aber der Strömungswiderstand vergrössert sich auf 123% des für die Packung 500.Y zu erwartenden Werts.

Nachfolgend wird die Erfindung anhand der Zeichnungen näher erläutert. Es zeigen:

Fig. 1 einen oberen Teil einer Kolonne mit Packungselementen,

Fig. 2 ein Fragment einer Packung mit Kreuzkanalstruktur (Idealform der Mellapak ®),

Fig. 3 ein Diagramm, in dem der Druckverlust in Abhängigkeit von der spezifischen Oberfläche für die Packung gemäss Fig. 2 dargestellt ist, und

Fig. 4 eine Tabelle mit Wertetripeln zu einer ausgezeichneten Kurve des Diagramms der Fig. 3.

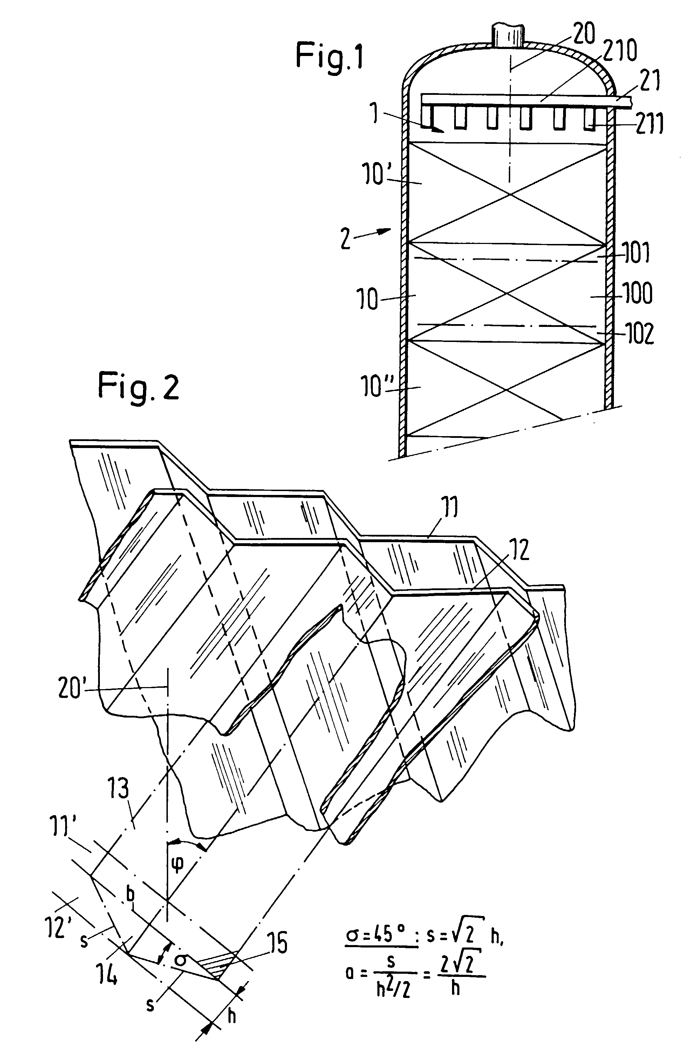

Eine Kolonne 2 mit einer Achse 20 - gemäss Fig. 1 - enthält eine Packung 1 und einen Flüssigkeitsverteiler 21 (Einspeiserohr 210, Verteilerkanäle 211). Mehrere Packungselementen 10, 10', 10" sind übereinander angeordnet. Bei besonderen Ausführungsformen der Kolonne 2 sind in den Packungselementen 10 jeweils eine untere Zone 102, eine mittlere Zone 100 und eine obere Zone 102 unterscheidbar. In den Zonen 101 und 102 an den Rändern der Packungselemente 10 ist aufgrund einer geeigneten Formgebung der Strömungswiderstand gegenüber jenem der mittleren Zone reduziert. Solche vorteilhaften Ausführungsformen sind aus der WO 97/16247 (= P.6765) bekannt.

Jedes Packungselement 10 ist aus einer Vielzahl von parallelen Lagen 11', 12' - siehe Fig. 2 - aufgebaut. In den Lagen 11', 12' werden durch zickzackartig gefaltete Folien 11 bzw. 12 parallele Kanäle 13 mit dreieckigen Querschnitten 14 gebildet. (Die Folien 11, 12 können auch beispielsweise sinusförmig gewellt sein.) Die Kanäle sind gegenüber der Vertikalen 20' (eine Parallele zur Kolonnenachse 20) geneigt: sie schliessen mit ihr einen Neigungswinkel $\varphi$ ein. An einer Berührungsebene 15 zwischen benachtbarten Lagen 11' und 12' kreuzen sich die in dieser Ebene 15 offenen Kanäle 13 der Lage 12' mit entsprechenden Kanälen der benachbarten Lage 11'. Der Querschnitt 14 hat die Form eines gleichschenkligen Dreiecks mit einer Höhe h (= Breite der Lage 12'), Schenkeln s und einer Basis b. Der Winkel a zwischen Schenkel s und Basis b beträgt in vielen Fällen 45°. Die spezifische Oberfläche a dieser Packung ist im Idealfall, dass die Faltkanten keine Rundungen aufweisen, durch den Ausdruck $2\sqrt{2}/h$ gegeben.

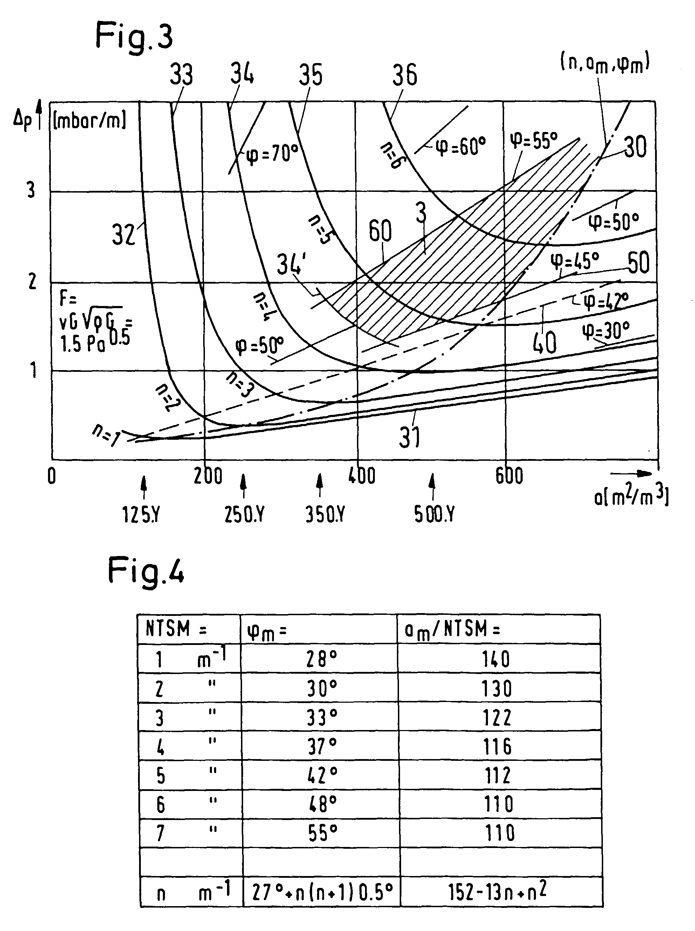

Fig. 3 zeigt Ergebnisse von neueren Grundlagenversuchen für Packungen 1 mit der in Fig. 2 dargestellten Struktur, wobei $\sigma = 45°$ und $\varphi$ Werte im Bereich zwischen 20° und 70° animmt. Diese Ergebnisse sind für konstante Fluidströme und $F = v_G\sqrt{\rho_G} = 1.5\ Pa^{0.5}$ erhalten worden ($v_G$ = Strömungsgeschwindigkeit, $p_G$ = Dichte des Gases G). Es lässt sich die Anzahl n von theoretischen Trennstufen pro Meter, nämlich die Grösse NTSM, empirisch bestimmen und durch eine erste Funktion $f_1(a, \varphi)$ der Variablen a und $\varphi$ darstellen. Der Strömungswiderstand, der sich für einen die Packung durchströmenden Gasstrom ergibt, ist durch einen Druckverlust pro Meter, $\Delta p$, als eine zweite Funktion $f_2$ (a, $\varphi$) charakterisierbar. Durch Elimination von $\varphi$ aus den Funktionen $f_1$ und $f_2$ kann $\Delta p$ als Funktion von a und n ausgedrückt werden. Im Diagramm der Fig. 3 ist diese Funktion als Schar von Kurven 31, 32, ... 36 dargestellt, wobei jede dieser Kurven den Druckabfall $\Delta p$ für NTSM = const, nämlich n = 1, 2, ... 6, in Abhängigkeit von der spezifischen Oberfläche a darstellt. Jede dieser Kurven 31, 32, ... 36 weist ein relatives Minimum auf, für das jeweils die Variablen $\sigma$ und $\varphi$ Werte $a_m(n)$ bzw. $\varphi_m(n)$ annehmen. Die Minimalpunkte liegen auf der strichpunktiert gezeichneten Kurve 30. Für die Werte $a_m$ und $\varphi_m$ gelten näherungsweise die in der Tabelle der Fig. 4 angegebenen Zahlen. Diese Zahlenreihen lassen sich mittels der zusätzlich in Fig. 4 angegebenen Formeln ausdrücken. Für andere Packungen mit Kreuzkanalstruktur, für die $\sigma$ nicht 45° beträgt oder die beispielsweise aus gewellten Folien aufgebaut sind, müssen selbstverständlich andere Zahlen für die Werte $a_m$ und $\varphi_m$ erwartet werden.

Die Minimalpunkte der Kurve 30 haben eine besondere Bedeutung, da die Kurven 31, ... 36 jeweils in der Umgebung ihres Minimums sehr flach sind: Für die Minimalpunkte sind die Strömungswiderstände für eine vorgegebene Trennleistung am geringsten. Es ist möglich, zu einer kleineren spezifischen Oberfläche a überzugehen, ohne dass dabei der Strömungswiderstand wesentlich anwächst, und zwar bei gleich bleibender Trennleistung. Bei zunehmendem Abstand vom Minimalpunkt nimmt dann allerdings der Strömungswiderstand progressiv zu. Es gibt irgendwo ein Optimum. Kriterien für ein Optimum sind einerseits die Kosten für die Packung, insbesondere für das Material der Packung, und andererseits die Druckverluste des Gasstroms beim Betrieb der Kolonne. Wie eine Optimierung durchzuführen ist, hängt von den besonderen Umständen des Einzelfalls ab.

Eine gestrichelte Gerade 40, für die $\varphi = 42°$ gilt, gibt näherungsweise die Werte $\Delta p$ für die bekannte Klasse der Packungen 125.Y, ... (vgl. unterer Rand des Diagramms in Fig. 3) an. Wie man sieht, verläuft diese Gerade 40 für a < 550 $m^{-1}$ in kleinem Abstand links neben der Kurve 30 mit den Minimalpunkten. Dies ist im Einklang mit dem bekannten Wissen, dass die Verwendung der Packungen 125.Y, ... für nicht zu hohe Trennleistungen günstig ist.

Die Gerade 40 schneidet die Kurve 30 bei ungefähr a = 550 $m^{-1}$. Das bedeutet, dass für ungefähr a > 500 $m^{-1}$ oder n > 4.5 (Kurve 34') die Klasse der Packungen 125.Y, ... nicht mehr für ein kostengünstiges Verfahren zur Stofftrennung geeignet ist. Es muss daher für hohe Trennleistungen eine neue Klasse von Packung verwendet werden, für die a = $a_{cl}$, $\varphi = \varphi_{cl}$ und folgende Bedingungen gelten:

n > 4.5, $a_{cl} < a_m(n)$, $\varphi_{cl} > \varphi_m(n)$ sowie $\varphi_{cl} > 45°$.

Durch diese Bedingungen ist das gegen oben offene Gebiet über den Kurven 34', 50 und 30 abgegrenzt. Wegen des progressiven Anwachsens des Strömungswiderstands kann sich dieses Gebiet nicht beliebig nach oben erstrecken. Eine Begrenzung nach oben ergibt sich durch die bereits erwähnten Optimierungen. Eine willkürlich angenommene Begrenzung ist eine Gerade 60, auf der $\varphi$ konstant gleich 55° ist. Das schraffierte Gebiet 3 legt dann Werte $a = a_{cl}$ und $\varphi = \varphi_{cl}$ fest, durch welche die erfindungsgemässe Klasse der Packungen mit Kreuzkanalstruktur definiert ist.

Aus praktischen Gründen ist es sinnvoll, eine Teilklasse - mit n (oder NTSM) als wählbarem Parameter - zu bilden, für die analog zu der Klasse der Packungen 125.Y, ... $\varphi = \varphi_{cl}$ eine Konstante ist. Vorzugsweise wird für $\varphi_{cl}$ 50° gewählt oder ein anderer Wert, der sich bis zu rund 2° oder 3° von 50° unterscheiden kann.

Wie aus dem Diagramm der Fig. 3 ersichtlich ist, nimmt der Strömungswiderstand auf der Kurve 30 mit wachsendem n progressiv zu. Es ist daher nicht sinnvoll, für die spezifische Trennleistung allzu hohe Werte anzustreben. Eine obere Grenze für n, die mit Vorteil nicht überschritten wird, ist für n = 7 gegeben.

Die erfindungsgemässe Packung eignet sich besonders gut für die Durchführung einer Luftzerlegung. Mit einer erfindungsgemässen Packung lässt sich beispielsweise auch eine Reaktivdestillation durchführen. Bei diesem Verfahren ist das Material an den Oberflächen der Packung zumindest teilweise katalytisch wirksam.

**Patentansprüche**

1. Packung (1) mit Kreuzkanalstruktur für eine Stoffaustauschkolonne (2) mit hoher spezifischer Trennleistung, die durch eine spezifische Oberfläche, a, und einen Neigungswinkel der Kanäle, $\varphi$, spezifizierbar ist und die einer Klasse von Packungen mit $a = a_{cl}$ und $\varphi = \varphi_{cl}$ gemäss folgenden Angaben zugehört:

   - für in der Packung fliessende Fluide sind jeweils gleich grosse Fluidströme vorgegeben;
   - eine für die Packung empirisch bestimmbare Anzahl n von theoretischen Trennstufen pro Meter, nämlich die Grösse NTSM, ist durch eine erste Funktion $f_1(a, \varphi)$ der Variablen a und $\varphi$ darstellbar;
   - ein Strömungswiderstand, der sich für einen die Packung durchströmenden Gasstrom ergibt, ist durch einen Druckverlust pro Meter, $\Delta p$, als eine zweite Funktion $f_2(a, \varphi)$ charakterisierbar;
   - $\Delta p$ nimmt unter der Nebenbedingung n = const ein relatives Minimum an, für das die Variablen a und $\varphi$ - in Abhängigkeit von der Grösse n - Werte $a_m(n)$ bzw. $\varphi_m(n)$ annehmen;
   - es gilt n > 4.5, $a_{cl} < a_m(n)$, $\varphi_{cl} > \varphi_m(n)$ sowie $\varphi_{cl} > 45°$.

2. Packung nach Anspruch 1, dadurch gekennzeichnet, dass $\varphi_{cl} < 55°$.

3. Packung nach Anspruch 1 oder 2, dadurch gekennzeichnet, dass für eine Teilklasse - mit n als wählbarem Parameter - $\varphi_{cl}$ eine Konstante ist, die vorzugsweise rund 50° beträgt.

4. Packung nach einem der Ansprüche 1 bis 3, dadurch gekennzeichnet, dass die Kanäle (13) durch zickzackartig gefaltete Folien (11, 12) gebildet sind und dass die Funktionen $a_m(n)$ bzw. $\varphi_m(n)$ für $F = v_G\sqrt{\rho_G} = 1.5\ Pa^{0.5}$ näherungsweise durch folgende Polynome gegeben sind:

$$a_m = (152 - 13n + n^2)\ NTSM,$$

$$\varphi_m = 27° + n(n+1)\ 0.5°.$$

5. Packung nach einem der Ansprüche 1 bis 4, dadurch gekennzeichnet, dass konkrete Werte $a_{cl}$ und $\varphi_{cl}$ mittels einer Optimierung festgelegt sind, die aufgrund von Kriterien durchgeführt ist, die von der jeweiligen Verwendung abhängt, bei welcher Optimierung beispielsweise sich einerseits die Kosten für die Packung (1), insbesondere für das Material der Packung, und andererseits die Druckverluste des Gasstroms beim Betrieb der Kolonne (2) in optimaler Weise klein halten lassen.

6. Packung nach einem der Ansprüche 1 bis 5, dadurch gekennzeichnet, dass in einer Kolonne (2) eine Mehrzahl von Packungselementen (10, 10', 1") übereinander angeordnet sind, wobei jedes Packungselement aus einer Vielzahl von parallelen Lagen (11', 12') aufgebaut ist.

7. Packung nach Anspruch 6, dadurch gekennzeichnet, dass in den Packungselementen (10) jeweils eine obere, eine mittlere und eine untere Zone (101, 100 bzw. 102 ) unterscheidbar sind und dass in den Zonen (101, 102) an den Rändern der Packungselemente aufgrund einer geeigneten Formgebung der Strömungswiderstand gegenüber jenem der mittleren Zone (100) reduziert ist.

8. Stoffaustauschkolonne mit einer Packung (1) gemäss einem der Ansprüche 1 bis 7.

9. Verfahren zum Betreiben einer Kolonne (2) gemäss Anspruch 8, dadurch gekennzeichnet, dass eine Stofftrennung bei einer spezifischen Trennleistung der Packung (1) durchgeführt wird, für die n grösser als rund 4.5 ist und für die vorzugsweise n kleiner als rund 7 ist.

10. Verfahren nach Anspruch 9 zur Durchführung einer Luftzerlegung oder zur Durchführung einer Reaktivdestillation, wobei das Material an den Oberflächen der Packung zumindest teilweise katalytisch aktiv wirksam ist.

Fig.1

Fig. 2

$$\frac{\sigma = 45°\,:\,s = \sqrt{2}\ h,}{a = \frac{s}{h^2/2} = \frac{2\sqrt{2}}{h}}$$

## Fig.3

## Fig.4

| NTSM = | | $\varphi_m$ = | $a_m$/ NTSM = |
|---|---|---|---|
| 1 | $m^{-1}$ | 28° | 140 |
| 2 | " | 30° | 130 |
| 3 | " | 33° | 122 |
| 4 | " | 37° | 116 |
| 5 | " | 42° | 112 |
| 6 | " | 48° | 110 |
| 7 | " | 55° | 110 |
| | | | |
| n | $m^{-1}$ | 27°+n (n+1) 0.5° | $152 - 13n + n^2$ |

Europäisches
Patentamt

**EUROPÄISCHER RECHERCHENBERICHT**

Nummer der Anmeldung

EP 99 81 1193

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 644 932 A (DUNBOBBIN BRIAN ROY, BENNETT DOUGLAS L, PILLARELLA MARK R) 8. Juli 1997 (1997-07-08) * Spalte 3, Zeile 9 - Spalte 6, Zeile 48 * * Abbildungen 1,3 * | 1,8 | B01J19/32 |
| A | US 4 929 399 A (LOCKETT MICHAEL J, VICTOR RICHARD A) 29. Mai 1990 (1990-05-29) * Spalte 2, Zeile 66 - Spalte 4, Zeile 53 * * Abbildung 3 * | 1,6,8 | |
| A | HANLEY B, DUNBOBBIN B, BENNETT D: "A Unified Model for Countercurrent Vapor/Liquid Packed Columns. 1.Pressure Drop" IND.ENG.CHEM.RES., Bd. 33, 1994, Seiten 1208-1221, XP002107706 * das ganze Dokument * | | |
| A | HANLEY B, DUNBOBBIN B, BENNETT D: "A Unified Model for Countercurrent Vapor/Liquid Packed Columns. 2. Equations for Mass- Transfer Coefficients, Mass- Transfer Area, the HETP, and the Dynamic Liquid Holdup" IND. ENG.CHEM.RES., Bd. 33, 1994, Seiten 1222-1230, XP002107707 * das ganze Dokument * | | **RECHERCHIERTE SACHGEBIETE (Int.Cl.7)**<br><br>B01J |

Der vorliegende Recherchenbericht wurde für alle Patentansprüche erstellt

| Recherchenort | Abschlußdatum der Recherche | Prüfer |
|---|---|---|
| DEN HAAG | 3. April 2000 | Vlassis, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 81 1193

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2000

| Im Recherchenbericht angeführtes Patentdokument | | Datum der Veröffentlichung | Mitglied(er) der Patentfamilie | | Datum der Veröffentlichung |
|---|---|---|---|---|---|
| US 5644932 | A | 08-07-1997 | KEINE | | |
| US 4929399 | A | 29-05-1990 | CA | 1327306 A | 01-03-1994 |
| | | | EP | 0337150 A | 18-10-1989 |
| | | | JP | 2009443 A | 12-01-1990 |
| | | | KR | 9410374 B | 22-10-1994 |
| | | | MX | 171654 B | 10-11-1993 |

EPO FORM P0461

Für nähere Einzelheiten zu diesem Anhang : siehe Amtsblatt des Europäischen Patentamts, Nr.12/82